# EUROPEAN PATENT APPLICATION

(11) **EP 4 478 458 A1**
(43) Date of publication of application: **18.12.2024**
(21) Application number: 23752239.6
(22) Date of filing: 17.01.2023
(51) Int. Cl.: H01M 4/62, H01M 4/131, H01M 4/525, H01M 10/0525

(54) **LITHIUM-SUPPLEMENTING ADDITIVE, AND PREPARATION METHOD THEREFOR AND APPLICATION THEREOF**

(30) Priority: 10.02.2022 CN 202210126899
(71) Applicant: Shenzhen Innovazone Technology Co., Ltd., Shenzhen, Guangdong 518000 (CN)
(72) Inventor: ZHU, Chengben, Shenzhen, Guangdong 518000 (CN); WAN, Yuanxin, Shenzhen, Guangdong 518000 (CN); KONG, Lingyong, Shenzhen, Guangdong 518000 (CN); ZHONG, Zeqin, Shenzhen, Guangdong 518000 (CN); ZHONG, Wen, Shenzhen, Guangdong 518000 (CN)
(74) Representative: Laine IP Oy
(86) International application number: PCT/CN2023/072612
(87) International publication number: WO 2023/151459

(57) **Abstract**

The present application discloses a lithium-supplementing additive, and a preparation method therefor and an application thereof. The lithium-supplementing additive comprises a granular lithium-supplementing material and also comprises lithium fluoride; moreover, the lithium fluoride is at least bonded to the surface of the lithium-supplementing material, and the lithium fluoride is generated by the reaction between an organic fluorine source and residual alkali contained in the lithium-supplementing material. The lithium-supplementing additive is high in purity, and a lithium fluoride coating layer at least bonded in situ to the surface of the lithium-supplementing material effectively achieves the effect of isolation and protection, so that it is ensured that the lithium-supplementing material is high in lithium-supplementing effect, storage performance and processing performance; moreover, the lithium fluoride improves the lithium-ion intercalation and deintercalation performance and the lithium-ion conductivity. In addition, the preparation method for a lithium-supplementing additive can ensure that a prepared lithium-supplementing additive is stable in structure and electrochemical performance, the efficiency is high, and the production cost is saved.

## Description

This application claims the priority from Chinese patent application No. 202210126899.6, titled "Lithium-Supplementing Additive, and Preparation Method Therefor and Application Thereof', filed on February 10, 2022, with the Chinese Patent Office, the entire contents of which are incorporated herein by reference.

### TECHNICAL FIELD

The present application relates to the technical field of secondary batteries, in particular, to a lithium-supplementing additive, and a preparation method therefor and application thereof.

### BACKGROUND

The oil energy crisis in the 1960s and 1970s has forced people to look for new alternative energy sources. The public awareness of environmental protection and energy crisis has also increased. Lithium-ion batteries are considered to be one of the most promising energy sources due to their high operating voltage and energy density, relatively small self-discharge level, no memory effect, no heavy metal pollution such as lead and cadmium, and ultra-long cycle life. Lithium-ion batteries are widely used in electric vehicles, power tools, mobile electronic consumer products, energy storage and so on.

At present, the most commonly used cathode materials for lithium-ion batteries are lithium iron phosphate, lithium nickel cobalt manganese (aluminum) ternary materials (commonly known as ternary materials), lithium cobalt oxide, lithium manganese oxide, etc., and the most commonly used anode materials are carbon-based graphite materials and silicon-based anode materials. Although lithium-ion batteries have various advantages, during the first charging process of lithium-ion batteries, a solid electrolyte interface (SEI) is usually formed on the anode surface. This process consumes a large amount of Li⁺, which means that part of Li⁺ deintercalated from the cathode material is irreversibly consumed, and the reversible specific capacity of the corresponding battery cell is reduced. Anode materials, especially silicon-based anode materials, will further consume Li⁺, causing lithium loss in cathode materials, reducing the initial Coulombic efficiency and capacity of lithium-ion batteries. For example, in a lithium-ion battery system using a graphite anode, the first charge will consume about 10% of the lithium source. When using anode materials with high-specific capacity, such as alloys (silicon, tin, etc.), oxides (silicon oxide, tin oxide) and amorphous carbon anodes, the consumption of cathode lithium sources will be further aggravated.

In order to improve the problem of low Coulombic efficiency caused by irreversible loss of the anode, researchers have developed lithium-rich compounds, such as LisN, Li₂S, Li₂NiO₂, Li₅FeO₄, Li₂MnO₂, and the like, as additives to solve the problem of irreversible loss of lithium ions during the first charge and discharge.

In these existing lithium-rich compounds, most lithium-supplementing materials are lithium salts of transition metals. However, due to the preparation process and defects in the properties of the material, the reaction of the raw material is often incomplete, and the purity is not high enough, thus the performance is poor. Moreover, the material is sensitive to water and oxygen, especially when in contact with water, it will react and deteriorate significantly. The processing process has extremely strict requirements for water control and is difficult to be applied on a large scale on the existing battery production line. Although there are publications utilizing, for example, carbon-coated lithium-rich compounds to isolate water and oxygen in the environment, these existing coating layers cannot effectively remove the raw material residues in the lithium-rich compounds, and the coating density is not ideal. In addition, this method also increases the path of ion intercalation and deintercalation and affects the ion conductivity.

### TECHNICAL PROBLEMS

An objective of the present application is to provide a lithium-supplementing additive and a preparation method therefor to overcome the problems of unsatisfactory lithium supplementing effect, storage performance and processibility due to the low purity in the existing cathode lithium-supplementing additives.

Another objective of the present application is to provide a cathode plate and a secondary battery containing the cathode plate to solve the problem that the electrochemical performance, such as the initial Coulombic efficiency, of the existing secondary batteries is not ideal.

### TECHNICAL PROPOSALS

In order to achieve the above objectives, a first aspect of the present application provides a lithium-supplementing additive. The lithium-supplementing additive of the present application includes a particulate lithium-supplementing material and lithium fluoride, the lithium fluoride is at least bonded to a surface of the lithium-supplementing material, and the lithium fluoride is generated by a reaction of an organic fluorine source and a residual alkali contained in the lithium-supplementing material.

Further, the lithium fluoride bonded to the surface of the lithium-supplementing material forms a lithium fluoride coating layer that fully or partially covers the lithium-supplementing material.

Further, the lithium fluoride is generated by thermal cracking of an organic fluorine source with the lithium-supplementing material in a protective atmosphere and reacting with the residual alkali contained in the lithium-supplementing material.

Further, a surface layer of particles of the lithium-supplementing material also contains lithium fluoride, and a content of lithium fluoride bonded to the surface of the particles is higher than the lithium fluoride contained in the surface layer of the particles.

Further, in the lithium-supplementing additive, a mass percentage of lithium fluoride is 0.1%-5%.

Further, a particle size of the lithium-supplementing material is 3 µm-20 µm.

Further, the lithium-supplementing additive further includes a hydrophobic encapsulation layer covering the lithium-supplementing material, and the hydrophobic encapsulation layer covers the lithium fluoride distributed on the surface of the lithium-supplementing material.

Further, the lithium-supplementing material includes at least one of LₓM_{y}O_{z}, and Li_{w}A, where L in the molecular formula is Li or/and a mixed alkali metal element of Li and at least one of K and Na not exceeding 30%; M includes at least one of Fe, Co, Ni, Mn, V, Fe-Co, Cu, Mo, Al, Ti, and Mg; O is an oxygen element; A includes at least one of C, N, O, P, S, F, B, and Se, and 0<x≤6, 0<y≤ 3, 0<z≤5, and 0<w≤5.

Further, the residual alkali contained in the lithium-supplementing material includes lithium oxide and/or lithium carbonate, a residual amount of lithium oxide is less than 0.15%, and a residual amount of lithium carbonate is less than 0.45%.

Further, the lithium-supplementing additive is a cathode lithium-supplementing additive, and for a cathode plate prepared from the cathode lithium-supplementing additive, a conductive agent and a binder, an attenuation rate of a capacity after being stored at an ambient humidity of 25% for 20 hours relative to that stored for 0.5 hours is no more than 30%; or, for a cathode plate prepared from the cathode lithium-supplementing additive, a conductive agent and a binder, an attenuation rate of a capacity after being stored at an ambient humidity of 10% for 20 hours relative to that stored for 0.5 hours is no more than 20%.

Further, the hydrophobic encapsulation layer includes at least one of an ionic conductor encapsulation layer and an electronic conductor encapsulation layer.

Specifically, a material of the ionic conductor encapsulation layer includes at least one of a perovskite-type ionic conductive material, a NASICON-type ionic conductive material, and a garnet-type ionic conductive material.

Specifically, a material of the electronic conductor encapsulation layer includes at least one of a carbon material, a conductive oxide, and a conductive organic material.

Further, the hydrophobic encapsulation layer has a thickness of 5 nm-100 nm.

A second aspect of the present application provides a preparation method for the lithium-supplementing additive of the present application. The preparation method for the lithium-supplementing additive of the present application includes the following steps:
performing, in a protective atmosphere, a mixing treatment of an organic fluorine source and a raw material of a particulate lithium-supplementing material, and performing a reaction treatment to generate lithium fluoride at least on a surface of the particulate lithium-supplementing material.

Further, the raw material of the particulate lithium-supplementing material and the fluorine source are mixed in a mass ratio of 100:(1-15).

Further, a temperature of the mixing treatment is 80°C-400°C.

Further, a temperature of the reaction treatment is 300°C-600°C.

Further, the generated lithium fluoride forms a lithium fluoride coating layer, which fully or partially coats the lithium-supplementing material.

Further, the protective atmosphere is formed by continuously introducing a chemically inert gas, and the chemically inert gas is introduced into the raw material of the particulate lithium-supplementing material for a bubbling treatment, in order to achieve the mixing treatment.

Specifically, the organic fluorine source is mixed with the raw material of the particulate lithium-supplementing material in a flowing manner, and the reaction treatment is carried out simultaneously.

Specifically, the organic fluorine source includes an organic fluoride that decomposes below 600°C and does not contain a hydroxyl group.

A third aspect of the present application provides an electrode plate, which includes a current collector and an electrode active layer bonded to the surface of the current collector, the electrode active layer contains the lithium-supplementing additive of the present application, or the lithium-supplementing additive prepared by the preparation method for a lithium-supplementing additive of the present application.

In a fourth aspect, a secondary battery is provided. The secondary battery of the present application includes a cathode plate and an anode plate; the cathode plate is the electrode plate of the present application, and the lithium-supplementing additive contained in the electrode plate of the present application is a cathode lithium-supplementing additive;
and /or, the anode plate is the electrode plate of the present application, and the lithium-supplementing additive contained in the electrode plate of the present application is an anode lithium-supplementing additive.

The present application has the following advantageous effects compared with the existing technologies:
The lithium-supplementing additive of the present application generates lithium fluoride in situ at least on the surface of the lithium-supplementing material through the reaction of the fluorine source with the residual alkali contained in the lithium-supplementing material. This, on the one hand, effectively reduces or removes the residual alkali including residual raw material of the lithium-supplementing material and improves the purity of the lithium-supplementing material, thereby enabling the lithium-supplementing additive of the present application to exhibit an excellent lithium supplementing effect; on the other hand, due to the high purity of the lithium-supplementing material and the in-situ generated lithium fluoride at least bonded to the surface of the lithium-supplementing material, this provides effective isolation and protection, so that the lithium-supplementing material is effectively isolated from the ambient environment, avoiding the contact of moisture, carbon dioxide, etc. in the ambient environment with the lithium-supplementing material, ensuring the stability of the lithium-supplementing material, thereby ensuring the lithium supplementing effect and stability of the lithium-supplementing additive, and improving the storage performance and processibility; thirdly, the high ion conductivity of lithium fluoride also allows the lithium-supplementing additive of the present application to possess high intercalation and deintercalation behaviors of lithium ions and good lithium ion conductivity, thereby improving the lithium supplementing effect of the lithium-supplementing additive.

The preparation method for a lithium-supplementing additive of the present application can effectively generate lithium fluoride through direct reaction of the fluorine source with the residual alkali contained in the lithium-supplementing material, so that lithium fluoride is bonded in situ to at least the surface of the particulate lithium-supplementing material in the prepared lithium-supplementing additive, and the prepared lithium-supplementing additive contains little impurities, such as residual alkali, and has high purity, and good environmental isolation performance, lithium supplementing effect, storage performance and processibility. In addition, the preparation method for a lithium-supplementing additive can ensure that the structure and electrochemical performance of the prepared cathode lithium-supplementing additive are stable, and the efficiency is high, thereby saving production costs.

Since the electrode plate of the present application contains the lithium-supplementing additive of the present application, the lithium-supplementing additive contained in the electrode plate of the present application can be used as a "sacrificial agent" during the first charging cycle to compensate for the irreversible lithium ions consumed by the formation of the SEI film on the anode, thereby maintaining the abundance of lithium ions in the battery system and improving the initial Coulombic efficiency and overall electrochemical performance of the battery. In addition, the lithium-supplementing additive contained therein has good processibility, and the electrode active layer of the electrode plate of the present application is of high quality and stable.

Since the secondary battery of the present application contains the electrode plate of the present application, the lithium-ion battery of the present application has excellent first Coulomb efficiency, high battery capacity and good cycling performance, long service life, and stable electrochemical performance.

### DESCRIPTION OF THE DRAWINGS

In order to more clearly illustrate the technical proposals in the embodiments of the present application, the drawings to be used in the description of the embodiments or exemplary technologies will be briefly introduced below. Apparently, the drawings in the following description are only some embodiments of the present application, for those of ordinary skill in the art, other drawings can be obtained based on these drawings without exerting creative efforts.
FIG. 1 is a schematic diagram of a structure of a lithium-supplementing additive according to an embodiment of the present application; and
FIG. 2 is a schematic diagram of another structure of the lithium-supplementing additive according to an embodiment of the present application.

### DETAILED DESCRIPTION OF THE EMBODIMENTS

In order to make the purpose, technical proposals, and advantages of the present application clearer, the present application will be further described in detail below with reference to the embodiments. It should be understood that the specific embodiments described here are only for explaining the present application and are not intended to limit the present application.

In this application, the term "and/or" refers to the association relationship of associated objects, indicating that there may be three relationships. For example, An and/or B may refer to: A exists alone, An and B exist at the same time, and B exists alone. An and B may be singular or plural. The character"/" generally indicates that the associated objects are in an "or" relationship.

In this application, "at least one" means one or more, and "a plurality of" means two or more. "At least one of the following" or similar expressions refers to any combination of these items, including any combination of single items or plural items. For example, "at least one of a, b or c", or "at least one of a, b and c", can both mean: a, b, c, a-b (namely an and b), a-c, b-c, or a-b-c, where a, b, c may be singular or plural.

It should be understood that in the various embodiments of the present application, the value of the serial numbers of the above-mentioned processes does not indicate the order of execution, some or all of the steps can be executed in parallel or sequentially, and the execution order of each process should be determined by its function and internal logic, and should not constitute any limitation on the implementation process of the embodiments of the present application.

The terms used in the embodiments of the present application are only for the purpose of describing specific embodiments, and are not intended to limit the present application. The singular forms "a", "said" and "the" used in the embodiments of the present application and the appended claims are also intended to include plural forms, unless the context clearly indicates otherwise.

The weight of the relevant components mentioned in the embodiments of the present application may not only refer to the specific content of each component, but also indicate the proportional relationship of the weights of the components. Therefore, the content of the relevant components is within the scope disclosed in the embodiments of the present application as long as it is proportionally scaled up or down according to the embodiments of the present application. Specifically, the mass described in the embodiments of the present application may be a mass unit known in the art of chemical engineering such as µg, mg, g, kg, etc.

The terms "first" and "second" are used only for descriptive purposes to distinguish objects such as substances from each other, and should not be understood as indicating or implying relative importance or implicitly indicating the number of indicated technical features. For example, without departing from the scope of the embodiments of the present application, the first XX may also be referred to as the second XX, and similarly, the second XX may also be referred to as the first XX. Thus, the features defined as "first" and "second" may explicitly or implicitly include one or more of the features.

In a first aspect, the present application provides a lithium-supplementing additive. The lithium-supplementing additive of the present application includes a lithium-supplementing material and lithium fluoride.

The lithium-supplementing additive of the embodiment of the present application has a lithium-supplementing material in a particulate form, that is, the lithium-supplementing material a morphology of particles. The lithium-supplementing material is rich in lithium, so as to ensure that the lithium-supplementing additive of the embodiment of the present application can provide abundant lithium. After being added to the electrode as a lithium-supplementing additive, the additive acts as a "sacrificial agent" during the first charging cycle, and releases almost all lithium ions contained in the lithium-supplementing additive at one to compensate for the irreversible lithium ions consumed by the formation of the SEI film on the anode.

In addition, the particle size of the particulate lithium-supplementing material may be controlled and adjusted according to production conditions or application requirements. For example, in an embodiment, the particle size of the particulate lithium-supplementing material is 3 µm-20 µm. By controlling and adjusting the particle size of the particulate lithium-supplementing material, the overall particle size of the lithium-supplementing additive in the embodiment of the present application can be controlled and adjusted, thereby fully exhibiting the lithium supplementing effect of the lithium-supplementing material.

In an embodiment, the above-mentioned lithium-supplementing material may include at least one of LₓM_{y}O_{z} and Li_{w}A. L in the molecular formula of LₓM_{y}O_{z} is Li or /and a mixed alkali metal element of Li and at least one of K and Na not exceeding 30%; M includes at least one of Fe, Co, Ni, Mn, V, Fe-Co, Cu, Mo, Al, Ti, and Mg; and 0<x≤6, 0<y≤3, and 0<z≤5. Therefore, according to the type of element represented by M, the lithium-supplementing material may be at least one of an iron-based lithium-supplementing material, a manganese-based lithium-supplementing material, a nickel-based lithium-supplementing material, and the like. In a specific embodiment, when M in LₓM_{y}O_{z} is Fe and Al, the lithium-rich lithium-supplementing material represented by LₓM_{y}O_{z} may be Li₅Fe_{0.98}Al_{0.02}O₄. It may also be, but not limited to, Li₂NiO₂, Li₅FeO₄, LiCoO₂, Li₂MnO₂, LiMn₂O₄, LiFePO₄, and the like, and may also be lithium manganese iron phosphate. These lithium-supplementing materials are rich in lithium and can release lithium ions during the first charging cycle to effectively supplement lithium. When the lithium-supplementing material has an antifluorite structure, it can also improve the unidirectional capacity characteristics of the lithium-supplementing material, thereby ensuring the lithium supplementing effect of the lithium-supplementing additive of the present application. When aluminum is used to dope the lithium-supplementing material, Al atoms substitute for iron atoms in the lattice. This substitution broadens the transmission channels for lithium ions, thereby enhancing the rate of lithium-ion deintercalation.

In Li_{w}A, A includes at least one element selected from C, N, O, P, S, F, B, and Se, and 0<w≤5. The lithium-supplementing material precursor represented by Li_{w}A is a precursor of a binary lithium-supplementing material, which may specifically be, but not limited to, LisN, Li₂S, Li₂O, Li₂O₂, and the like.

In addition, the type of lithium-supplementing material, such as cathode lithium-supplementing material or anode lithium-supplementing material, determines the type of lithium-supplementing additive in the embodiment of the present application, such as a cathode lithium-supplementing additive or an anode lithium-supplementing additive. When it is an anode lithium-supplementing additive, the anode lithium-supplementing additive is formed by high-temperature sintering of lithium salts such as lithium, lithium oxide, and lithium hydroxide as raw materials.

According to the characteristics of the existing lithium-supplementing materials, the residual alkali contained therein is at least or mainly distributed on the surface of the lithium-supplementing material. The residual alkali includes residual raw materials of precursors of the lithium-supplementing material, and other residual alkali impurities such as by-products generated during the preparation process, such as lithium carbonate and lithium oxide. After testing, taking the content of lithium carbonate and lithium oxide as an example, the content of residual lithium oxide in the existing lithium-supplementing material is about 0.5 wt%-3 wt%, and the residual content of lithium carbonate is about 0.02 wt%-9 wt%.

The lithium fluoride in the lithium-supplementing additive in the embodiment of the present application is at least bonded to the surface of the above-mentioned particulate lithium-supplementing material, and the lithium fluoride is generated by the reaction between the organic fluorine source and the residual alkali contained in the lithium-supplementing material. In this manner, the lithium-supplementing additive of the embodiment of the present application generates lithium fluoride in situ at least on the surface of the lithium-supplementing material through the reaction between the organic fluorine source and the residual alkali in the lithium-supplementing material. First, this effectively reduces or removes the residual alkali contained in the lithium-supplementing material, improving the purity of the lithium-supplementing material, such that the lithium-supplementing additive of the embodiment of the present application has a good lithium-supplementing effect. After testing, further, the amount of residual alkali contained in the lithium-supplementing additive of the embodiment of the present application is significantly reduced, for example, about 95%-98% of the residual alkali can be removed. Taking the residual alkali of lithium oxide and lithium carbonate contained in the lithium-supplementing additive in the embodiment of the present application as an example, the residual amount of lithium oxide is less than 0.15%, and the residual amount of lithium carbonate is less than 0.45%. Secondly, due to the high purity of the lithium-supplementing material, and the generated lithium fluoride is at least in-situ bonded to the surface of the lithium-supplementing material, which effectively provides isolation and protection, effectively isolating the lithium-supplementing material from the ambient environment, avoiding the contact between carbon dioxide and moisture in the ambient environment, and ensuring the stability of the lithium-supplementing material, thereby ensuring the lithium-supplementing effect and lithium-supplementing stability of the lithium-supplementing additives, and improving storage performance and processibility. Thirdly, the good ion conductivity of lithium fluoride also enables the lithium-supplementing additive of the embodiment of the present application to exhibit high lithium-ion intercalation and deintercalation properties and lithium-ion conductivity, thereby improving the electrochemical performance of the lithium-supplementing additive.

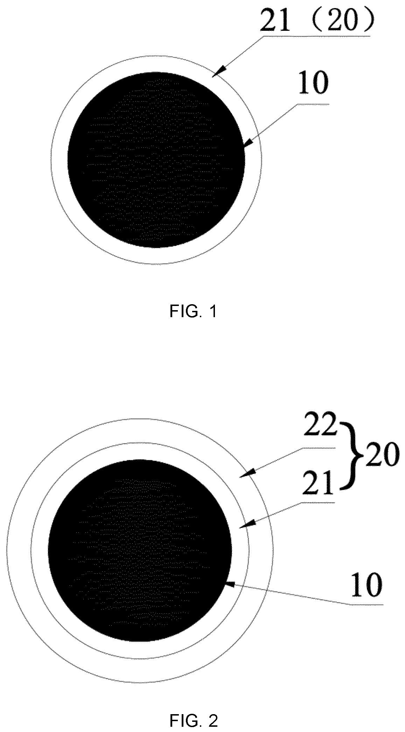

In the embodiment, the lithium fluoride contained in the lithium-supplementing additive of the embodiment of the present application is at least bonded to the surface of the above lithium-supplementing material, and due to the distribution of the residual alkali in the lithium-supplementing material, in the embodiment, a lithium fluoride coating layer that fully or partially covers the lithium-supplementing material can be formed by combining the lithium fluoride bonded to the surface of the above lithium-supplementing material. Here, the lithium-supplementing additive of the embodiment of the present application forms a core-shell structure, as shown in FIG. 1. The above particulate lithium-supplementing material constitutes the core 10, and the lithium fluoride coating layer 21 constitutes the shell 20, at least a part of the shell 20. The lithium fluoride coating layer 21 can fully or partially cover the lithium-supplementing material, namely the core 10, preferably full coverage, so that it can effectively reduce or remove residues such as raw materials and residual alkali, improve the purity of the lithium-supplementing material, improve the protective effect of the lithium fluoride coating layer 21 on the lithium-supplementing material, and enhance the storage, processibility, and stability of the lithium-supplementing additive of the embodiment of the present application.

In the embodiment, when the organic fluorine source reacts with the residual alkali contained in the lithium-supplementing material, the lithium fluoride contained in the lithium-supplementing additive of the embodiment of the present application is generated by thermal cracking of the organic fluorine source with the lithium-supplementing material in a protective atmosphere and reacting with the raw material of the lithium-supplementing material precursor, which will be described in detail below in the preparation method for the lithium-supplementing additive. When an organic fluorine source is used as the fluorine source, the C-F bond is destroyed during the thermal cracking treatment and reacts with the residual raw material of the lithium-supplementing material precursor contained in the lithium-supplementing material to generate lithium fluoride, which is at least in situ bonded to the surface of the lithium-supplementing material, such as forming a lithium fluoride coating layer 21. Moreover, the organic fluorine source has basically no corrosion to the lithium-supplementing material, effectively ensuring the stability of the electrochemical properties of the lithium-supplementing material. Moreover, the organic fluorine source can effectively lower the reaction conditions and improve the electrochemical properties and economic cost of the lithium-supplementing additive.

In addition, although the residual alkali contained in the lithium-supplementing material is mainly distributed on the surface of the lithium-supplementing material, it may also be further distributed in the surface layer thereof. Therefore, in the embodiment, the lithium fluoride in the lithium-supplementing additive of the embodiment of the present application may also be further distributed in the surface layer of the above-mentioned particulate lithium-supplementing material. That is, the particles of the above-mentioned lithium-supplementing material have lithium fluoride bonded to their surface and also contain lithium fluoride in their surface layer. The content of lithium fluoride bonded to the surface of the particles of the above-mentioned lithium-supplementing material is higher than the lithium fluoride contained in the surface layer of the particles. By forming lithium fluoride in the surface layer of the above-mentioned particulate lithium-supplementing material, the residual alkali contained in the lithium-supplementing material can be reduced or removed to a maximum extent, improving the purity of the above-mentioned particulate lithium-supplementing material, thereby improving the lithium-supplementing effect, storage performance, and processibility, furthermore, it can improve the ion deintercalation efficiency of the lithium-supplementing additive of the embodiment of the present application.

In the embodiment, the total mass percentage of lithium fluoride contained in the lithium-supplementing additive in the embodiment of the present application is 0.1 %-5%, further 1%-5%, and specifically may be a typical but non-limiting content of 0.1%, 0.5%, 1%, 2%, 3%, 4%, 5%, etc. By controlling the content of lithium fluoride, the purity and ion deintercalation efficiency of the above-mentioned particulate lithium-supplementing material can be improved, and the lithium fluoride bonded to the surface of the above-mentioned particulate lithium-supplementing material can be formed into a lithium fluoride coating layer as much as possible to achieve full coverage of the lithium-supplementing material, thereby improving the lithium supplementing effect, storage performance and processibility of the lithium-supplementing additive of the embodiment of the present application.

On the basis of the various above embodiments, as an embodiment of the present application, the lithium-supplementing additive of the present application embodiment further includes a hydrophobic encapsulation layer. The hydrophobic encapsulation layer is coated on the above lithium-supplementing material. Here, it is apparent that the hydrophobic encapsulation layer should be coated on the lithium fluoride distributed on the surface of the lithium-supplementing material.

For example, when the lithium fluoride bonded to the surface of the lithium-supplementing material provides a full coverage, the hydrophobic encapsulation layer is coated on the outer surface of the fully coated lithium fluoride coating layer. When the lithium fluoride bonded to the surface of the lithium-supplementing material provides a partial coverage, the hydrophobic encapsulation layer is coated on the outer surface of the partially coated lithium fluoride coating layer. By adding the hydrophobic encapsulation layer to the lithium-supplementing additive of the present application embodiment, the hydrophobic encapsulation layer can effectively coat the above lithium-supplementing material and the lithium fluoride bonded to its surface, such as the fully coated or partially coated lithium fluoride coating layer. The above lithium-supplementing material is coated by a good dense hydrophobic coating layer formed by the hydrophobic encapsulation layer or further the combination of the hydrophobic encapsulation layer and the lithium fluoride distributed on the surface of the lithium-supplementing material, so that the isolation effect of the above lithium-supplementing material from the ambient environment is enhanced, and the contact between the ambient environment such as moisture and carbon dioxide and the above lithium-supplementing material is avoided, ensuring the stability of the above lithium-supplementing material, thereby ensuring the lithium supplementing effect and the stability of the lithium-supplementing additive of the present application. Additionally, the lithium fluoride can also improve the conductivity of lithium ions.

The structure of the lithium-supplementing additive in the embodiment of the present application is shown in FIG. 2. Combined with FIG. 1, the hydrophobic encapsulation layer 22 covers the core 10 of the above lithium-supplementing material, and the hydrophobic encapsulation layer 22 covers the lithium fluoride distributed on the surface of the core 10 of the lithium-supplementing material, such as, specifically, the lithium fluoride coating layer 21 coated on the surface of the core 10 of the lithium-supplementing material.

In the embodiment, the particulate lithium-supplementing material as shown in FIG. 1 and FIG. 2 may be at least one of a primary particle and a secondary particle. Similarly, the particulate lithium-supplementing material containing lithium fluoride coated by the hydrophobic encapsulation layer 22 in FIG. 2 may also be at least one of a primary particle and a secondary particle. The particle size of the primary particle or secondary particle of the particulate lithium-supplementing material or the particulate lithium-supplementing material with lithium fluoride bonded to the surface may be controlled and adjusted according to actual needs.

When the lithium-supplementing additive of the embodiment of the present application contains the above-mentioned hydrophobic encapsulation layer, the hydrophobic encapsulation layer may be a layer structure that can effectively isolate adverse factors such as moisture or carbon dioxide in the environment, so its material may be a material that can form a dense hydrophobic coating layer and effectively ensure the stability of the particulate lithium-supplementing material. On this basis, the material of the hydrophobic encapsulation layer may also be an ionic conductor encapsulation layer that can facilitate ionic conductivity, or it may be an electronic conductor encapsulation layer can facilitate electronic conductivity, and of course, it may also be a composite layer structure of an ionic conductor encapsulation layer and an electronic conductor encapsulation layer. When the hydrophobic encapsulation layer is a composite layer structure of an ionic conductor encapsulation layer and an electronic conductor encapsulation layer, any one layer of the ionic conductor encapsulation layer or the electronic conductor encapsulation layer may be directly coated on the surface of the above particulate lithium-supplementing material with lithium fluoride on the surface. The ionic conductor encapsulation layer can improve the intercalation and deintercalation effect of lithium ions on the lithium-supplementing material and the ionic conductivity of lithium ions. The electronic conductor encapsulation layer can improve the electronic conductivity of the lithium-supplementing material, improve its conduction performance, stimulate the specific capacity of the lithium-supplementing additive, and achieve truly efficient lithium supplementation.

When the hydrophobic encapsulation layer includes an ionic conductor encapsulation layer, the ionic conductor encapsulation layer, or further, its combination with the lithium fluoride bonded to the surface of the particulate lithium-supplementing material, such as the lithium fluoride coating layer 21 as shown in FIGS. 1 and 2, improves the lithium-ion conductivity. Therefore, the material of the ionic conductor encapsulation layer may be a material that is conducive to improving ion conductivity, such as at least one of a perovskite-type ionic conductive material, a NASICON-type ionic conductive material, and a garnet-type ionic conductive material, but is not limited thereto. In a specific embodiment, the perovskite-type ionic conductive material includes Li₃ₓLa_{2/3-x}TiO₃ (LLTO), such as at least one of Li_{0.5}La_{0.5}TiO₃, Li_{0.33}La_{0.57}TiO₃, Li_{0.29}La_{0.57}TiO₃, Li_{0.33}Ba_{0.25}La_{0.39}TiO₃, (Li_{0.33}La_{0.56})_{1.005}Ti_{0.99}Al_{0.01}O₃, Li_{0.5}La_{0.5}Ti_{0.95}Zr_{0.05}O₃, and the like. The NASICON-type ionic conductive material is such as, but not limited to, Li_{1.4}Al_{0.4}Ti_{1.6}(PO₄)₃ (LATP). The garnet-type ionic conductive material includes at least one of Li₇La₃Zr₂O₁₂ (LLZO), Li_{6.4}La₃Zr_{1.4}Ta_{0.6}O₁₂, and Li_{6.5}La₃Zr_{1.5}Ta_{0.5}O₁₂. By selecting the material of the ionic conductor encapsulation layer, the ion conductivity of the ionic conductor encapsulation layer can be further improved.

When the hydrophobic encapsulation layer includes an electronic conductor encapsulation layer, the electronic conductor encapsulation layer can enhance the electronic conductivity of the hydrophobic encapsulation layer, thereby enhancing the electronic conductivity of the lithium-supplementing additive, which is beneficial to reducing the impedance of the electrode. Additionally, during the release process of the above-mentioned particulate lithium-supplementing material as a "sacrificial agent" and after the release process, the electronic conductor encapsulation layer can also be reused to play an auxiliary role as a conductive agent inside the electrode. Moreover, the electronic conductor encapsulation layer, or further in combination with the ionic conductor encapsulation layer, plays a synergistic role in densification, improving the density of the hydrophobic encapsulation layer, thereby improving the lithium supplement stability and lithium supplementing effect of the lithium-supplementing additive. Based on the role of the electronic conductor encapsulation layer, the electronic conductor encapsulation layer may be fully coated or partially coated. In the embodiment, the material of the electronic conductor encapsulation layer includes at least one of a carbon material, a conductive oxide, and a conductive organic compound. In a specific embodiment, when the material of the electronic conductor encapsulation layer is a carbon material, the carbon material includes at least one of amorphous carbon, carbon nanotubes, graphite, carbon black, graphene, and the like. In other specific embodiments, when the material of the electronic conductor encapsulation layer is a conductive oxide, the conductive oxide may include at least one of InzOs, ZnO, and SnOz. The conductive organic compound may be a conductive polymer, and the like. By adjusting the content and material of the electronic conductor encapsulation layer, the electronic conductivity can be further improved.

In a further embodiment, the hydrophobic encapsulation layer, such as the hydrophobic encapsulation layer 22 shown in FIG. 2, may have a thickness of 5-100 nm. For example, the thickness may be controlled by adjusting the thickness of the ionic conductor encapsulation layer and the electronic conductor encapsulation layer contained in the hydrophobic encapsulation layer. By controlling the thickness of the hydrophobic encapsulation layer within this range, the compactness of the hydrophobic encapsulation layer is enhanced, thereby improving the storage stability and processing stability of the lithium-supplementing additive, and improving the ionic and/or electronic conductivity of the lithium-supplementing additive.

In addition, the hydrophobic encapsulation layer may further include other functional layers as required, and the types of other functional layers may be flexibly selected as required.

Based on the structure and performance of the lithium-supplementing additive in the above embodiments of the present application, especially when a hydrophobic encapsulation layer 22 is contained, the lithium-supplementing additive in the above embodiments of the present application has excellent storage performance and processibility and stable electrochemical performance. As tested, when the lithium-supplementing additive in the embodiment of the present application is a cathode lithium-supplementing additive, the cathode plate prepared, for example, from the cathode lithium-supplementing additive, a conductive agent and a binder, has an attenuation rate of a capacity thereof after being stored at an ambient humidity of 25% for 20 hours relative to that stored for 0.5 hours of no more than 30%, and further no more than 15%, an attenuation rate of a capacity thereof after being stored at an ambient humidity of 20% for 20 hours relative to that stored for 0.5 hours of no more than 20%, and further not more than 8.5%, and an attenuation rate of a capacity thereof after being stored at an ambient humidity of 10% for 20 hours relative to that stored for 0.5 hours of no more than 10%, and further no more than 3%. This shows that the lithium-supplementing additive in the embodiment of the present application has excellent storage performance, and high lithium supplementing effect and lithium supplement stability. Ideally, the above-mentioned lithium-supplementing additives are stored in a favorable environment that is dry and oxygen-free, such as a vacuum environment to maximize the electrochemical performance of the lithium-supplementing additive of the present application (Note: attenuation rate = (1- specific capacity after 20 hours of storage/specific capacity after 0.5 hours of storage) * 100%.

In a second aspect, the present application further provides a preparation method for the lithium-supplementing additive described above. The preparation method for the lithium-supplementing additive of the present application includes the following steps:
performing, in a protective atmosphere, a mixing treatment of an organic fluorine source and a raw material of a particulate lithium-supplementing material, and performing a reaction treatment to generate lithium fluoride at least on a surface of the particulate lithium-supplementing material.

The raw material of the particulate lithium-supplementing material is the raw material for forming the particulate lithium-supplementing material contained in the lithium-supplementing additive in the above embodiments of the present application. Therefore, the raw material of the particulate lithium-supplementing material is the same as the conventional lithium-supplementing material, and generally contains residual raw material of the precursor of the lithium-supplementing material at least on the surface thereof. Then the type and particle size of the raw material of the particulate lithium-supplementing material are the same as the particulate lithium-supplementing material contained in the lithium-supplementing additive in the above embodiments of the present application. The raw material of the particulate lithium-supplementing material will not be described in detail here for brevity.

In the mixing process of the organic fluorine source and the raw material of the particulate lithium-supplementing material, the amount of the organic fluorine source added is ideally relatively excessive, so that the residual alkali contained in the raw material of the particulate lithium-supplementing material can fully react with the organic fluorine source to generate lithium fluoride. For example, by controlling the amount of the organic fluorine source added, the content of the generated lithium fluoride is within the above-mentioned range, and the mass percentage of lithium fluoride in the lithium-supplementing additive is 0.1%-5%, thereby reducing the content of impurities in the raw material of particulate lithium-supplementing material to the greatest extent and improving the purity of the lithium-supplementing material generated after the reaction treatment. The inventors found that when the amount of the organic fluorine source added is too much, a certain corrosion phenomenon occurs on the lithium-supplementing material generated after the reaction during the reaction treatment, which will have a certain adverse effect on the lithium supplementing effect of the lithium-supplementing material and will also cause a waste of the organic fluorine source, increasing the production cost of the lithium-supplementing additive. Therefore, in the embodiment, the raw material of particulate lithium-supplementing material and the organic fluorine source may be mixed according to a mass ratio of 100:(0.1-15). The mixing ratio within this range can make the residual alkali contained in the raw material of the particulate lithium-supplementing material fully react with the organic fluorine source to generate lithium fluoride, improving the purity of the lithium-supplementing material generated after the reaction treatment, thereby improving the lithium supplementing effect and processibility of the lithium-supplementing material. Additionally, the lithium fluoride can form a lithium fluoride coating layer on the surface of the lithium-supplementing material, and preferably, the lithium fluoride coating layer completely covers the lithium-supplementing material. In addition, the corrosion of the lithium-supplementing material due to excessive organic fluorine source is also avoided, thereby improving the lithium supplementing effect of the prepared lithium-supplementing additive.

The mixing treatment of the organic fluorine source and the raw material of the particulate lithium-supplementing material should be sufficient, so that lithium fluoride can be fully generated during the reaction treatment, and the uniformity of the distribution of lithium fluoride, especially the lithium fluoride on the surface of the lithium-supplementing material, can be improved. In the embodiment, the fluorine source is mixed with the raw material of the particulate lithium-supplementing material in a flowing manner, and the above-mentioned reaction treatment is carried out simultaneously with the mixing treatment. Mixing the fluorine source with the raw material of the particulate lithium-supplementing material in a flowing manner can effectively improve the contact between the fluorine source and the raw material of the particulate lithium-supplementing material, and improve the efficiency of the reaction treatment of the organic fluorine source, so that the raw material of the lithium-supplementing material precursor or other residual alkali contained in the raw material of the particulate lithium-supplementing material is reacted, the purity of the lithium-supplementing material is improved, and the uniformity of the distribution of lithium fluoride, especially on the surface of the lithium-supplementing material, is improved, so that lithium fluoride can act as a protective layer and enhance the ion conductivity.

In the embodiment, the temperature of the mixing treatment of the fluorine source and the raw material of the particulate lithium-supplementing material is controlled in a range of 80°C-400°C. By controlling the temperature within this range during the mixing treatment, the efficiency of the reaction treatment can be enhanced, lithium fluoride can be fully generated, and the dispersion uniformity of lithium fluoride can be improved.

In the embodiment, the protective atmosphere is formed by continuously introducing a chemically inert gas, and the chemically inert gas is introduced into the raw material of the particulate lithium-supplementing material for bubbling treatment to achieve the above-mentioned mixing treatment. By using the chemically inert gas to bubble the raw material of the particulate lithium-supplementing material, the raw material of the particulate lithium-supplementing material and the fluorine source can be kept in a dynamic mixing state during the reaction treatment, so that they are fully mixed and fully contacted. Further, the bubbling treatment can be maintained during the reaction treatment, thereby effectively improving the reaction efficiency of the fluorine source, and improving the contact between the fluorine source and the raw material of the particulate lithium-supplementing material, so that the raw material of the lithium-supplementing material precursor or other residual alkali contained in the raw material of the particulate lithium-supplementing material is reacted, and the uniformity of the distribution of lithium fluoride, especially on the surface of the lithium-supplementing material, is improved, so that the lithium fluoride acts as a protective layer and improve the ionic conductivity. In a specific embodiment, the chemically inert gas may be a conventional chemically inert gas, such as at least one of Ar, N₂, and He, etc.

Based on the above-mentioned embodiment of bubbling a chemically inert gas, the introduced chemically inert gas can be used as a carrier gas to load the organic fluorine source and mix it with the raw material of the particulate lithium-supplementing material, and the above-mentioned organic fluorine source can be mixed with the raw material of the particulate lithium-supplementing material in a flowing manner.

The above reaction treatment is carried out such that the organic fluorine source reacts with the residual alkali contained in the raw material of particulate lithium-supplementing material, so that the fluorine element reacts with the residual alkali contained in the raw material of the particulate lithium-supplementing material to generate lithium fluoride, and then the raw material of the particulate lithium-supplementing material also become the particulate lithium-supplementing material contained in the above lithium-supplementing additive after the reaction treatment. The temperature of the reaction treatment should at least be the temperature at which the organic fluorine source decomposes.

The temperature of the reaction treatment can be determined according to the type of organic fluorine source. In the embodiment, the organic fluorine source may be a hydroxyl-free organic fluoride that can be decomposed below 600°C, such as at least one of fluorobenzene, pentafluorobenzene, 1,3-difluorobenzene, trifluorotoluene, 3-fluorotrifluorotoluene, 4-fluorotrifluorotoluene, 2,3,5,6-tetrafluorotrifluorotoluene, bis(2,2,2-trifluoroethyl)ether, 1,1,2,2-tetrafluoroethyl methyl ether, and 1,1,2,2-tetrafluoroethyl-2,2,2-trifluoroethyl ether. These organic fluorine sources are rich in fluorine and can provide fluorine during the reaction process and react with impurities such as residual alkali contained in the raw materials of the particulate lithium-supplementing material to generate lithium fluoride. In addition, no side effects such as corrosive or gaseous products will be generated during the reaction process, for example, no corrosion to the generated lithium-supplementing material, thereby ensuring the stability of the electrochemical properties of the lithium-supplementing material. Moreover, organic fluorides are easy to decompose, which can reduce the conditions of the reaction process, such as reducing the reaction temperature and increasing the yield of lithium fluoride.

The inventors further found in the study that, although the efficiency of the reaction treatment can be improved when the temperature of the reaction treatment is increased, higher temperatures are not always desired. If the temperature is too high, the organic fluorine source will react too fast, causing the organic fluorine source to react unevenly with lithium, thereby causing the generated lithium fluoride to be unevenly distributed, so that the effect of lithium fluoride on ionic conductivity is not ideal. Moreover, if the temperature is too high, it will also cause the lithium fluoride at least combined on the surface of the lithium-supplementing additive to be unevenly distributed, making it difficult to form a uniformly distributed lithium fluoride coating layer, such as a fully coated lithium fluoride coating layer. In addition, when the reaction treatment is carried out at an excessively high temperature, the organic fluorine source itself decomposes or produces byproducts with the raw material of the particulate lithium-supplementing material, thereby affecting the lithium-supplementing effect or capacity of the lithium-supplementing material, and reducing the electrochemical performance of the lithium-supplementing additive. By controlling conditions of the reaction treatment such as temperature, the organic fluorine source can be effectively reacted, and lithium fluoride is generated, while improving the electrochemical performance of the generated lithium-supplementing material. In particular, when the lithium-supplementing material contains silicon, the carbon generated by the cracking of the organic fluorine source will react with silicon to generate silicon carbide which has no electrochemical activity, thereby reducing the capacity of the lithium-supplementing material. Therefore, in the embodiment, the temperature of the above-mentioned reaction treatment is 300°C-600°C. On the one hand, the temperature of the reaction treatment can effectively make the fluorine source react with the residual raw material of the particulate lithium-supplementing material to generate lithium fluoride, and reduce or avoid the generation of by-products to improve the lithium supplementing effect or capacity of the lithium-supplementing material, that is, the lithium-supplementing additive. In addition, the duration of the reaction treatment should be sufficient, such as 1-4 hrs at the above-mentioned reaction temperature.

In a further embodiment, after the step of generating lithium fluoride on the surface of the particulate lithium-supplementing material after the above reaction treatment, the method further includes a step of forming a hydrophobic encapsulation layer on the surface of the lithium-supplementing material. The hydrophobic encapsulation layer should be the lithium fluoride coated and distributed on the surface of the lithium-supplementing material. For example, an ionic conductor encapsulation layer, an electronic conductor encapsulation layer, or a composite layer of an ionic conductor encapsulation layer and an electronic conductor encapsulation layer contained in the above lithium-supplementing additive is formed. In addition, the method for forming the hydrophobic encapsulation layer may be formed by selecting a corresponding or suitable method according to the film structure and material.

As in the embodiment, when the hydrophobic encapsulation layer is a carbon coating layer, the carbon coating layer may be formed by thermal cracking and coating of a solid carbon source. If a solid carbon source is used for coating, the above-mentioned lithium-supplementing additive after reaction treatment is first mixed with a solid carbon source after crushing, and the mixing method includes at least one of ball-milled solid phase mixing, soymilk machine mixing, three-dimensional mixer mixing, high-efficiency mixer mixing, and fusion machine mixing. After mixing, sintering is performed under an inert condition. The carbon source may be at least one of glucose, sucrose, starch, citric acid, cellulose, polytetrafluoroethylene (PTFE), polyvinylidene fluoride (PVDF), asphalt, and the like. The inert atmosphere may be at least one of Ar, N₂, and He. The sintering temperature may be 400°C-800°C, and the time may be 1-10 hrs. The sintering treatment can make the carbon coating layer uniform and dense. If the temperature is too low, the carbon source will be difficult to crack, and the carbon coating will not be achieved. If the temperature is too high, the carbon source may crack too fast, resulting in uneven carbon coating. Moreover, when the lithium-supplementing material contains silicon, carbon and silicon may react under high-temperature conditions to form silicon carbide that is electrochemically inactive, thereby reducing the material capacity. The final mass ratio of carbon to lithium-supplementing material is controlled to be (2-20):100. If the final carbon content of this mixing ratio is too low, the carbon cannot completely coat the lithium-supplementing material, and there will be defective sites on the material surface affecting the conductivity.

Therefore, the above-mentioned preparation method for the lithium-supplementing additive can effectively generate lithium fluoride through direct reaction of the fluorine source with the residual alkali contained in the lithium-supplementing material, so that the prepared lithium-supplementing additive has the structural characteristics and corresponding electrochemical properties of the lithium-supplementing additive in the above-mentioned embodiments of the application, such as a lithium fluoride coating layer is at least in situ bonded to the surface of the raw material of the particulate lithium-supplementing material, and the prepared lithium-supplementing additive has low impurities such as residual alkali and high purity, and it also has environmental isolation characteristics, and good lithium supplementing effect, storage performance, and processibility. In addition, the preparation method of the lithium-supplementing additive can ensure that the structure and electrochemical performance of the prepared cathode lithium-supplementing additive are stable, and the efficiency is high, saving production costs.

In a third aspect, the embodiments of the present application also provide an electrode plate. The electrode plate of the embodiments of the present application includes an electrode current collector and an electrode active layer bonded to the surface of the electrode current collector, and the electrode active layer contains the above-mentioned electrode lithium-supplementing additive in the embodiments of the present application. Since the electrode plate of the embodiments of the present application contains the above-mentioned electrode lithium-supplementing additive of the embodiments of the present application, during the charging and discharging process, the lithium-supplementing additive contained in the electrode plate exhibits the above-mentioned properties, and can be used as a lithium source as a "sacrificial agent" that is to be consumed first in the first charging cycle, so as to replenish the irreversible lithium ions consumed by the formation of SEI film on the anode, thereby maintaining the abundance of lithium ions in the battery system and improving the initial Coulombic efficiency and overall electrochemical performance of the battery. Moreover, the electrode plate has stable quality and a high yield rate.

In one embodiment, the mass content of the electrode lithium-supplementing additive in the above-mentioned embodiment of the present application contained in the electrode active layer may be 1 wt%-20 wt%, further 2 wt%-10 wt%. The electrode active layer includes, in addition to the electrode lithium-supplementing additive, an electrode active material, a binder, and a conductive agent. The binder may be a conventional electrode binder, such as one or more of polyvinylidene chloride, soluble polytetrafluoroethylene, styrene-butadiene rubber, hydroxypropyl methylcellulose, methylcellulose, carboxymethyl cellulose, polyvinyl alcohol, acrylonitrile copolymer, sodium alginate, chitosan, and chitosan derivatives. In the embodiment of the present application, the conductive agent may be a conventional conductive agent, such as one or more of graphite, carbon black, acetylene black, graphene, carbon fiber, C60, and carbon nanotubes. The electrode active material may be a cathode active material or an anode active material. In a specific embodiment, the cathode active material includes one or more of lithium cobaltate, lithium manganate, lithium iron phosphate, lithium vanadium phosphate, lithium vanadium oxyphosphate, lithium vanadium fluorophosphate, lithium titanate, lithium nickel cobalt manganate, and lithium nickel cobalt aluminum.

When the electrode plate of the present application embodiment is a cathode plate, the electrode active material contained in the electrode active layer thereof is a cathode active material, and the above-mentioned lithium-supplementing additive in the embodiment of the present application contained therein is a cathode lithium-supplementing additive. When the electrode plate of the present application embodiment is an anode plate, the electrode active material contained in the electrode active layer thereof is an anode active material, and the above-mentioned lithium-supplementing additive in the embodiment of the present application contained therein is an anode lithium-supplementing additive.

In the embodiment, the electrode plate may be prepared as follows: an electrode active material, the electrode lithium-supplementing additive, a conductive agent and a binder are mixed to obtain an electrode slurry, the electrode slurry is coated on the electrode current collector, and the electrode plate is prepared through drying, rolling, die-cutting, and so on.

In a fourth aspect, an embodiment of the present application provides a secondary battery. The secondary battery of the embodiment of the present application includes necessary components such as a cathode plate, an anode plate, a separator, and an electrolyte, and of course also includes other necessary or auxiliary components. The cathode plate and/or the anode plate are the above-mentioned electrode plates in the embodiments of the present application. Specifically, when the electrode plate is a cathode plate and contains the above-mentioned lithium-supplementing additive in the embodiments of the present application, and the lithium-supplementing additive is a cathode lithium-supplementing additive, then the cathode plate in the secondary battery is the above-mentioned electrode plate (cathode plate) in the embodiments of the present application. When the electrode plate is an anode plate and contains the above-mentioned lithium-supplementing additive in the embodiments of the present application, and the lithium-supplementing additive is an anode lithium-supplementing additive, then the anode plate in the secondary battery is the above-mentioned electrode plate (anode plate) in the embodiments of the present application. Alternatively, both the cathode plate and the anode plate contain the above-mentioned lithium-supplementing additive in the embodiments of the present application.

Since the secondary battery of the embodiment of the present application contains the above-mentioned lithium-supplementing additive in the embodiments of the present application, based on the excellent lithium supplementing performance of above-mentioned lithium-supplementing additive in the embodiments of the present application, or further with the ion conductivity and/or electronic conductivity and processibility, the secondary battery of the embodiment of the present application can have excellent initial Coulombic efficiency, battery capacity and cycle performance, long service life, and stable electrochemical performance.

The lithium-supplementing additive and preparation method therefor and application thereof according to the present application are described below by various specific examples.

### 1. Lithium-supplementing additive and method for controlling particle size thereof:

### Example 1

This example provides a lithium-supplementing additive and a preparation method thereof. The lithium-supplementing additive is a particulate Li₂NiO₂ lithium-supplementing material, a lithium fluoride coating layer is coated at least on the surface thereof, and a carbon coating layer is further coated on the outer surface of the lithium fluoride coating layer, and the lithium fluoride coating layer and the carbon coating layer constitute a dense encapsulation layer.

The method for controlling the particle size of the lithium-supplementing additive in this example includes the following steps:
S1. Preparation of the raw material of the particulate Li₂NiO₂ lithium-supplementing material:
   Li₂NiO₂ was prepared using lithium hydroxide and nickel hydroxide as raw materials;
S2. In-situ formation of lithium fluoride at least on the surface of the raw material of the particulate Li₂NiO₂ lithium-supplementing material:
   Li₂NiO₂ was placed in a tube furnace under anhydrous conditions and heated in a nitrogen atmosphere. After the internal temperature of the tube furnace was raised to 200°C, pentafluorobenzene was added to a heatable device according to a weight ratio of anhydrous organic fluorine source to Li₂NiO₂ of 8:100, and the reaction was carried out at a temperature of 500°C for 4 hours to obtain a fluoride-coated Li₂NiO₂ material; the method of adding anhydrous organic fluorine source to the heatable device is as follows: liquid pentafluorobenzene was injected into a container, the container having a pipeline connected to the heatable device; an inert gas was continuously introduced into the pentafluorobenzene, and the inert gas was bubbled in the anhydrous organic fluorine source, and the pentafluorobenzene was volatilized by bubbling and entered the heatable device through the pipeline;
S3. In-situ formation of a carbon coating layer on the surface of the lithium-supplementing material containing lithium fluoride:
   fluoride-coated Li₂NiO₂ material was subjected to a first crushing and sieving, and then a carbon coating treatment, and the method of carbon coating treatment was as follows: after the fluoride-coated Li₂NiO₂ was mixed with asphalt in a mass ratio of 3:100, heat treatment was performed under argon atmosphere, sintering at 700°C for 6 hrs, and taken out after natural cooling; after the carbon coating treatment was completed, it was subjected to a second crushing and sieving to obtain the final product.

After testing, the mass content of lithium fluoride in the lithium-supplementing additive was 3.8%, the average thickness of the carbon coating layer was about 20 nm, and the particle size D50 of the lithium-supplementing additive was about 3.8 µm.

### Example 2

The present example provides a lithium-supplementing additive and a preparation method thereof. The lithium-supplementing additive is a particulate Li₅FeO₄ lithium-supplementing material, a lithium fluoride coating layer is coated at least on the surface thereof, a carbon coating layer is further coated on the outer surface of the lithium fluoride coating layer, and the lithium fluoride coating layer and the carbon coating layer constitute a dense encapsulation layer.

The method for controlling the particle size of the lithium-supplementing additive in this example includes the following steps:
S1. Preparation of the raw material of the particulate Li₅FeO₄ lithium-supplementing material:
   particulate Li₅FeO₄ lithium-supplementing material was prepared according to the existing method;
S2. In-situ formation of lithium fluoride at least on the surface of the raw material of the particulate Li₅FeO₄ lithium-supplementing material:
   the prepared Li₅FeO₄ was placed in a tube furnace under anhydrous conditions and heated in a argon atmosphere. After the internal temperature of the tube furnace was raised to 350°C, pentafluorobenzene was added to a heatable device according to a weight ratio of anhydrous organic fluorine source to Li₅FeO₄ of 8:100, and the reaction was carried out at a temperature of 580°C for 6 hours to obtain Li₅FeO₄ material containing fluoride the surface thereof;
S3. In-situ formation of a carbon coating layer on the surface of the lithium-supplementing material containing lithium fluoride:
   the Li₅FeO₄ material containing fluoride the surface thereof was subjected to a first crushing and sieving, and then a carbon coating treatment, and the method of carbon coating treatment was as follows: after the organic-fluorine treatment, silicon oxide and glucose were mixed at a mass ratio of 5:100, and heat treatment was performed under argon atmosphere, sintering at 6650°C for 4 hrs, and taken out after natural cooling; after the carbon coating treatment was completed, it was subjected to a second crushing and sieving to obtain the final product.

After testing, the mass content of lithium fluoride in the lithium-supplementing additive was 4.5%, the thickness of the carbon coating layer in the lithium-supplementing additive was 50 nm, and the particle size D50 of the lithium-supplementing additive was 9.7 µm.

### Example 3

This comparative example provides a lithium-supplementing additive and a preparation method therefor. The lithium-supplementing additive in this comparative example is the raw material of the particulate lithium-supplementing material prepared in step S1 in Example 1. Compared with Example 1, the lithium-supplementing additive in this comparative example does not contain a carbon layer, and the lithium fluoride coating layer is the same as that in Example 1.

### Example 4

This comparative example provides a lithium-supplementing additive and a preparation method therefor. The lithium-supplementing additive in this comparative example is the raw material of the particulate lithium-supplementing material prepared in step S1 in Example 2. Compared with Example 2, the lithium-supplementing additive in this comparative example does not contain a carbon layer, and the lithium fluoride coating layer is the same as that in Example 2.

### Comparative Example 1

This comparative example provides a lithium-supplementing additive and a preparation method therefor. The lithium-supplementing additive in this comparative example is the raw material of the particulate lithium-supplementing material prepared in step S1 in Example 1. Compared with Example 1, the lithium-supplementing additive in this comparative example does not contain a lithium fluoride layer, and the carbon coating layer is the same as that in Example 1.

### Comparative Example 2

This comparative example provides a lithium-supplementing additive and a preparation method therefor. The lithium-supplementing additive in this comparative example is the raw material of the particulate lithium-supplementing material prepared in step S1 in Example 2. Compared with Example 2, the lithium-supplementing additive in this comparative example does not contain a lithium fluoride coating layer, and the carbon coating layer is the same as that in Example 2.

### 2. Examples of lithium-ion battery:

The lithium-supplementing additives provided in the above-mentioned Examples 1 to 3 and Comparative Examples 1 to 2 were respectively assembled into cathodes and lithium-ion batteries according to the following methods:
Cathode: Under the same conditions, the lithium-supplementing additive:Super P-Li:PVDF were mixed at a mass ratio of 90:5:5, the solvent was NMP, and the mixing was by ball mill mixing or degasser mixing. For the ball mill, the ball milling time was 30 min; the speed was set to 20 HZ. For a homogenizer degasser, the speed was 600 rpm for 30 s, and then 2000 rpm for 15 mins. After the homogenization-coating-drying-slitting, a cathode plate was prepared, and the cathode plate was baked in a vacuum oven at 100°C to remove trace water. The lithium-supplementing additives were the lithium-supplementing additives provided in the above-mentioned Examples 1 to 3 and Comparative Examples 1 to 2.
Anode: lithium metal sheet;
Electrolyte: the electrolyte was a 1 mol/L LiPF₆ solution, and the solvent was composed of EC (ethylene carbonate) and DEC (diethyl carbonate) in a volume ratio of 1:1.
Separator: PE separator.
Battery shell: (including anode shell, stainless steel gasket, and cathode shell) model CR2032
Assembly of lithium-ion battery: according to an assembly sequence of anode shell-stainless steel gasket-lithium metal sheet-separator-electrolyte-cathode plate-cathode shell, button lithium-ion batteries were assembled in a glove box filled with argon gas and with water and oxygen content less than 10 ppm.

### 3. Relevant performance tests of lithium-ion batteries

The electrochemical properties of the lithium-ion batteries assembled in the above lithium-ion battery examples were tested under the following test conditions:
In a constant temperature box at 25°C, the assembled batteries were placed horizontally for 6 hours before the test step began. They were charged to 4.3 V at a constant current of 0.03 C, left for 5 minutes, and then charged at a constant voltage until the current reached 0.01 C. The capacity and constant voltage ratio during the constant current and constant voltage charging stages were each recorded, where the constant voltage ratio is the ratio of the charging capacity in the constant voltage stage to the sum of the charging capacities in the constant current and constant voltage stages. The results are shown in Table 1.

**Table 1**

| **Experimental groups** | **Constant current charging capacity mAh/g** | **Constant voltage charging capacity mAh/g** | **Total charging capacity mAh/g** | **Constant voltage ratio %** |
|---|---|---|---|---|
| Example 1 | 386.2 | 11.1 | 397.3 | 2.79% |
| Example 2 | 667.1 | 21.3 | 688.4 | 3.09% |
| Example 3 | 189.3 | 22.8 | 212.1 | 10.75% |
| Example 4 | 350.5 | 50.3 | 400.8 | 12.55% |
| Comparative Example 1 | 211.8 | 22.9 | 234.7 | 9.76% |
| Comparative example 2 | 369.8 | 50.8 | 420.6 | 12.08% |

It can be seen from the examples and comparative examples in the above table that when the lithium-supplementing material does not have the lithium fluoride coating layer, the charging capacity in the constant current stage is significantly reduced, and the constant voltage ratio which measures the internal resistance of the material becomes significantly larger. This is because residual alkali on the surface of the lithium-supplementing material before being treated with fluoride, and a small amount of water exists in the environment or battery system during the manufacturing, the internal resistance of the material increases significantly. However, compared with the lithium-supplementing material with the lithium fluoride coating, due to the presence of the conductive carbon coating layer, the conductivity of the material is improved, so the internal resistance is reduced accordingly, and the constant voltage ratio is also relatively low. After being treated with lithium fluoride and carbon coating, the battery is insensitive to trace amounts of water, exhibits high capacity, and has a low constant voltage ratio, thereby exhibiting excellent lithium supplementation effect.

The above embodiments only show several implementation methods of the present application, and the descriptions thereof are relatively specific and detailed, but they cannot be construed as limiting the scope of the present application. It should be pointed out that, for a person of ordinary skill in the art, several modifications and improvements can be made without departing from the concept of the present application, and these all belong to the scope of protection of the present application. Therefore, the protection scope of the present application shall be defied by the appended claims.

## Claims

1. A lithium-supplementing additive, comprising a particulate lithium-supplementing material, **characterized by** further comprising: lithium fluoride, wherein the lithium fluoride is at least bonded to a surface of the lithium-supplementing material, and the lithium fluoride is generated by a reaction of an organic fluorine source and a residual alkali contained in the lithium-supplementing material.

2. The lithium-supplementing additive as claimed in claim 1, wherein, the lithium fluoride bonded to the surface of the lithium-supplementing material forms a lithium fluoride coating layer that fully or partially covers the lithium-supplementing material; and/or
the lithium fluoride is generated by thermal cracking of an organic fluorine source with the lithium-supplementing material in a protective atmosphere and reacting with the residual alkali contained in the lithium-supplementing material; and/or
a surface layer of particles of the lithium-supplementing material also contains lithium fluoride, and a content of lithium fluoride bonded to the surface of the particles is higher than the lithium fluoride contained in the surface layer of the particles.

3. The lithium-supplementing additive as claimed in claim 1 or 2, wherein, in the lithium-supplementing additive, a mass percentage of lithium fluoride is 0.1%-5%; and/or
the lithium-supplementing additive further comprises a hydrophobic encapsulation layer covering the lithium-supplementing material, and the hydrophobic encapsulation layer covers the lithium fluoride distributed on the surface of the lithium-supplementing material; and/or
the lithium-supplementing material comprises at least one of LₓM_{y}O_{z}, and Li_{w}A, wherein L is Li or/and a mixed alkali metal element of Li and at least one of K and Na not exceeding 30%; M comprises at least one of Fe, Co, Ni, Mn, V, Fe-Co, Cu, Mo, Al, Ti, and Mg; A comprises at least one of C, N, O, P, S, F, B, and Se, and 0<x≤6, 0<y≤ 3, 0<z≤5, and 0<w≤5; and/or
the residual alkali contained in the lithium-supplementing material comprises lithium oxide and/or lithium carbonate, a residual amount of the lithium oxide is less than 0.15%, and a residual amount of the lithium carbonate is less than 0.45%; and/or
the lithium-supplementing additive is a cathode lithium-supplementing additive, and for a cathode plate prepared from the cathode lithium-supplementing additive, a conductive agent, and a binder, an attenuation rate of a capacity after being stored at an ambient humidity of 25% for 20 hours relative to that stored for 0.5 hours is no more than 30%; or, for a cathode plate prepared from the cathode lithium-supplementing additive, a conductive agent, and a binder, an attenuation rate of a capacity after being stored at an ambient humidity of 10% for 20 hours relative to that stored for 0.5 hours is no more than 20%.

4. The lithium-supplementing additive as claimed in claim 3, wherein, the LₓM_{y}O_{z} comprises at least one of Li₅Fe_{0.98}Al_{0.02}O₄, Li₂NiO₂, Li₅FeO₄, LiCoO₂, Li₂MnO₂, LiMn₂O₄, and LiFePO₄; and
the Li_{w}A comprises at least one of LisN, Li₂S, and Li₂O, Li₂O₂.

5. The lithium-supplementing additive as claimed in claim 3 or 4, wherein, the hydrophobic encapsulation layer comprises at least one of an ionic conductor encapsulation layer and an electronic conductor encapsulation layer; and/or
the hydrophobic encapsulation layer has a thickness of 5 nm-100 nm.

6. The lithium-supplementing additive as claimed in claim 5, wherein, a material of the ionic conductor encapsulation layer includes at least one of a perovskite-type ionic conductive material, a NASICON-type ionic conductive material, and a garnet-type ionic conductive material; and
a material of the electronic conductor encapsulation layer includes at least one of a carbon material, a conductive oxide, and a conductive organic material.

7. The lithium-supplementing additive as claimed in any of claims 1 to 6, wherein, a particle size of the lithium-supplementing material is 3 µm-20 µm.

8. A preparation method for a lithium-supplementing additive, **characterized by** comprising:
performing, in a protective atmosphere, a mixing treatment of an organic fluorine source and a raw material of a particulate lithium-supplementing material, and performing a reaction treatment to generate lithium fluoride at least on a surface of the particulate lithium-supplementing material.

9. The preparation method as claimed in claim 8, wherein, the raw material of the particulate lithium-supplementing material and the fluorine source are mixed in a mass ratio of 100:(1-15); and/or
a temperature of the mixing treatment is 80°C-400°C; and/or
a temperature of the reaction treatment is 300°C-600°C; and/or
the lithium fluoride generated forms a lithium fluoride coating layer, which fully or partially coats the lithium-supplementing material.

10. The preparation method as claimed in claim 8 or 9, wherein, the protective atmosphere is formed by continuously introducing a chemically inert gas, and the chemically inert gas is introduced into the raw material of the particulate lithium-supplementing material for a bubbling treatment, in order to achieve the mixing treatment.

11. The preparation method as claimed in claim 10, wherein, the organic fluorine source is mixed with the raw material of the particulate lithium-supplementing material in a flowing manner, and the reaction treatment is carried out simultaneously; and/or
the organic fluorine source includes an organic fluoride that decomposes below 600°C and does not contain a hydroxyl group.

12. An electrode plate, comprising a current collector and an electrode active layer bonded to a surface of the current collector, wherein the electrode active layer contains the lithium-supplementing additive as claimed in any of claims 1 to 7, or the lithium-supplementing additive prepared by the preparation method as claimed in any of claims 8 to 11.

13. A secondary battery, comprising a cathode plate and an anode plate, wherein the cathode plate is the electrode plate as claimed in claim 12, and a lithium-supplementing additive contained in the electrode plate is a cathode lithium-supplementing additive;
and/or
the anode plate is the electrode plate as claimed in claim 12, and a lithium-supplementing additive contained in the electrode plate is an anode lithium-supplementing additive.
